# EUROPÄISCHE PATENTSCHRIFT

(11) **EP 0 608 463 B1**
(45) Veröffentlichungstag und Bekanntmachung des Hinweises auf die Patenterteilung: **31.01.1996**
(21) Anmeldenummer: 93103625.5
(22) Anmeldetag: 06.03.1993
(51) Int. Cl.: G07F 9/10, A47J 37/12, A47J 37/04

(54) **Verkaufsautomat für Pommes frites**
Vending machine for French fries
Distributeur automatique de frites

(30) Priorität: 25.01.1993 DE 4301726
(43) Veröffentlichungstag der Anmeldung: 03.08.1994
(73) Patentinhaber: Münchow, Sigrid, D-45472 Mülheim (DE)
(72) Erfinder: Münchow, Karl, D-46537 Dinslaken (DE); Hühne, Siegmar, D-46487 Wesel (DE)
(74) Vertreter: Honke, Manfred, Dr.-Ing.

(56) Entgegenhaltungen:
- DE-A- 3 904 008
- US-A- 1 630 676
- US-A- 1 789 428
- US-A- 3 474 726
- US-A- 4 478 140
- US-A- 4 971 223

## Beschreibung

Die Erfindung betrifft einen Verkaufsautomaten für Pommes frites, mit einem kühlbaren Vorratsbehälter für rohe oder vorfritierte Kartoffelstäbchen, einer im Bereich des unteren Endes des Vorratsbehälters angeordneten Dosiereinrichtung zum Überführen einer vorgegebenen Kartoffelstäbchenmenge und einer mit einer oberen Einfüllöffnung unter der Dosiereinrichtung angeordneten, teilweise mit einem Fritiermittel gefüllten beheizbaren Friteuse mit Transporteinrichtung zum Durchleiten der Kartoffelstäbchenmenge. wobei die Transporteinrichtung ein um eine horizontale Achse drehbar in der Friteuse gelagertes, von einem Antriebsmotor antreibbares Schaufelrad mit sich zwischen zur Achse senkrechten Wandungen der Friteuse erstreckenden ebenen Transportschaufeln aufweist und zentral zwischen den Transportschaufeln ein Zentraltubus mit einer oberen Öffnung und einer am Zentraltubus befestigten Fallrinne zum Abführen der Pommes frites angeordnet ist.

Bei einem bekannten Verkaufsautomaten der genannten Art (DE-A-3 904 008) weist die Friteuse kreiszylindrische Gestalt auf, sie stellt gleichsam die Umhüllende des Schaufelrades dar. Damit ist praktisch das gesamte, in der Friteuse befindliche Fritiermittelvolumen permanent in den Fritiervorgang einbezogen, so daß das Fritiermittel in verhältnismäßig kurzen Zeitintervallen ausgewechselt werden muß und der Verkaufsautomat hohe Serviceansprüche stellt. Das Schaufelrad weist insgesamt fünf Schaufeln aus parallelen Drahtabschnitten auf. In diesen Drahtschaufeln und zwischen den Drahtschaufeln sowie den feststehenden Friteusenteilen können sich aufgrund der Nachgiebigkeit der Drahtabschnitte leicht Kartoffelstäbchen verklemmen, die erst viel später als verbrannte Bestandteile in den abgegebenen Portionen erscheinen, was der Qualität des Verkaufsproduktes natürlich abträglich ist. Die fertigen Pommes frites werden vom Schaufelrad in den Zentraltubus auf ein Sieb befördert, von dem sie per Hand mit einer herauszuziehenden Schublade auf die Fallrinne befördert werden. Das ist sehr umständlich und konstruktiv aufwendig. Lästig ist auch, daß das Innere der Friteuse erst nach axialem Auseinanderziehen der Friteuse zugänglich ist, was ein vorheriges vollständiges Ablassen des Fritiermittels voraussetzt.

Zwar ist auch eine Friteuse bekannt (US-A-3 474 726) bei der die Fallrinne in den Zentraltubus hinein bis unter dessen obere Öffnung geführt ist. Die Nachteile der zuvor beschriebenen bekannten Vorrichtung (DE-A-3 904 008) können so aber nur teilweise beseitigt werden.

Der Erfindung liegt die Aufgabe zugrunde, einen Verkaufsautomaten der eingangs genannten Art konstruktiv so einfach auszubilden, daß er wenig störanfällig ist.

Die erfindungsgemäße Lösung dieser Aufgabe besteht darin, daß die Friteuse einen quaderförmigen Friteuseninnenraum aufweist, in den ein in seinem unteren Bereich halbkreisförmig gebogenes perforiertes Blech eingehängt ist, daß am Schaufelrad nur zwei, sich gegenüberliegend zwischen diesem Blech und dem Zentraltubus erstreckende perforierte Transportschaufeln in einer gegenüber der Achse des Schaufelrades versetzten Anordnung vorgesehen sind und daß die Fallrinne in den Zentraltubus hinein bis unter dessen obere Öffnung geführt ist.

Die quaderförmige Gestalt des Friteuseninnenraumes hat in Verbindung mit dem eingehängten perforierten Blech zunächst zur Folge, daß ein erheblich größeres Fritiermittelvolumen zur Verfügung steht, so daß ein Austausch wesentlich seltener durchgeführt werden muß und damit die Wartungsintervalle verlängert sind. Zum Säubern der Friteuse sind nur das Schaufelrad und das Blech nach oben herauszuheben, d. h. ein Ablassen des Fritiermittels ist nicht erforderlich. Der Aufbau des Schaufelrades mit nur zwei Schaufeln aus perforiertem Blech führt zu konstruktiver Einfachheit und hoher Funktionstüchtigkeit. Im Gegensatz zur Ausführung mit einer Vielzahl von Fritierkammern kann jede Pommes frites-Portion bezüglich ihres Bräunungs- bzw. Fritiergrades individuell eingestellt werden, so wie der Bedienende das wünscht. Die versetzte Anordnung der beiden Transportschaufeln und die gleichsam verlängerte Fallrinne stellen eine automatische zuverlässige Abgabe der Pommes frites sicher, und zwar bei reduziertem technischen Aufwand. Im Ergebnis wird trotz einfacherer konstruktiver Ausführung eine höhere Gebrauchstüchtigkeit erreicht.

In weiterer Ausgestaltung des erfindungsgemäßen Verkaufsautomaten ist vorgesehen, daß die Friteuse im Bereich der Einfüllöffnung mit einer Öldämpfeabsaugeinrichtung versehen ist, insbesondere um eine Verschmutzung von oberhalb der Friteuse angeordneten Vorrichtungsteilen durch Öldämpfekondensat zu vermeiden. Um für das Fritiermittel eine möglichst lange Standzeit zu gewährleisten, sollte die Friteuse mit einem ein Filter und eine Pumpe aufweisenden Ölreinigungskreislauf ausgerüstet sein. Dem gleichen Zweck dient die Maßnahme, der Friteuse einen Fritiermittelvorratsbehälter zum Ergänzen des Fritiermittels in der Friteuse zuzuordnen.

Im folgenden wird die Erfindung anhand einer ein Ausführungsbeispiel darstellenden Zeichnung näher erläutert. Es zeigen in schematischer Darstellung perspektivisch
- Fig. 1: die wesentlichen Teile eines Verkaufsautomaten,

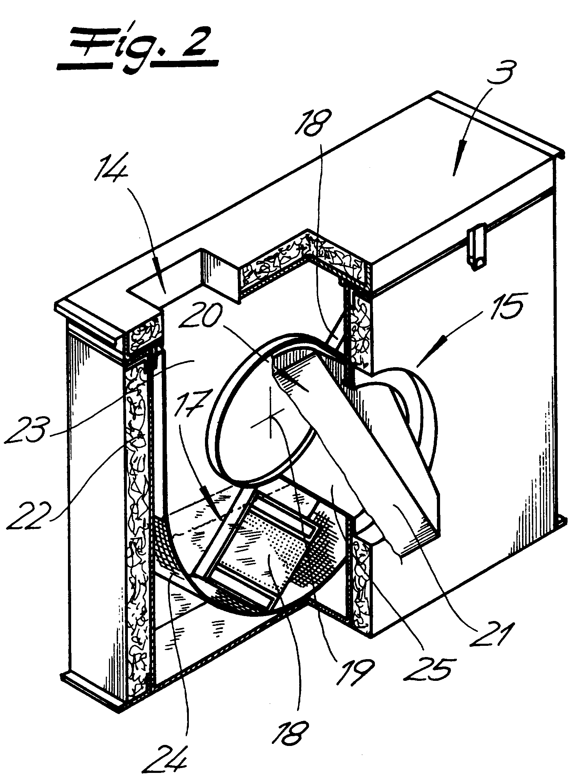

- Fig. 2: einen Teil des Gegenstandes der Fig. 1 - zum Teil aufgebrochen und
- Fig. 3: den in Fig. 2 dargestellten Teil der Vorrichtung von seiner Rückseite her.

Der in den Figuren dargestellte Verkaufsautomat dient zum Verkauf von Pommes frites, die im Verkaufsautomaten aus rohen oder vorfritierten Kartoffelstäbchen hergestellt werden. In seinem grundsätzlichen Aufbau besteht der Verkaufsautomat aus einem Vorratsbehälter 1 für die rohen oder vorfritierten Kartoffelstäbchen, einer Dosiereinrichtung 2 und einer Friteuse 3. Der Vorratsbehälter 1 ist dadurch kühlbar, daß er zusammen mit der Dosiereinrichtung 2 in einem Kühlschrank 4 angeordnet ist.

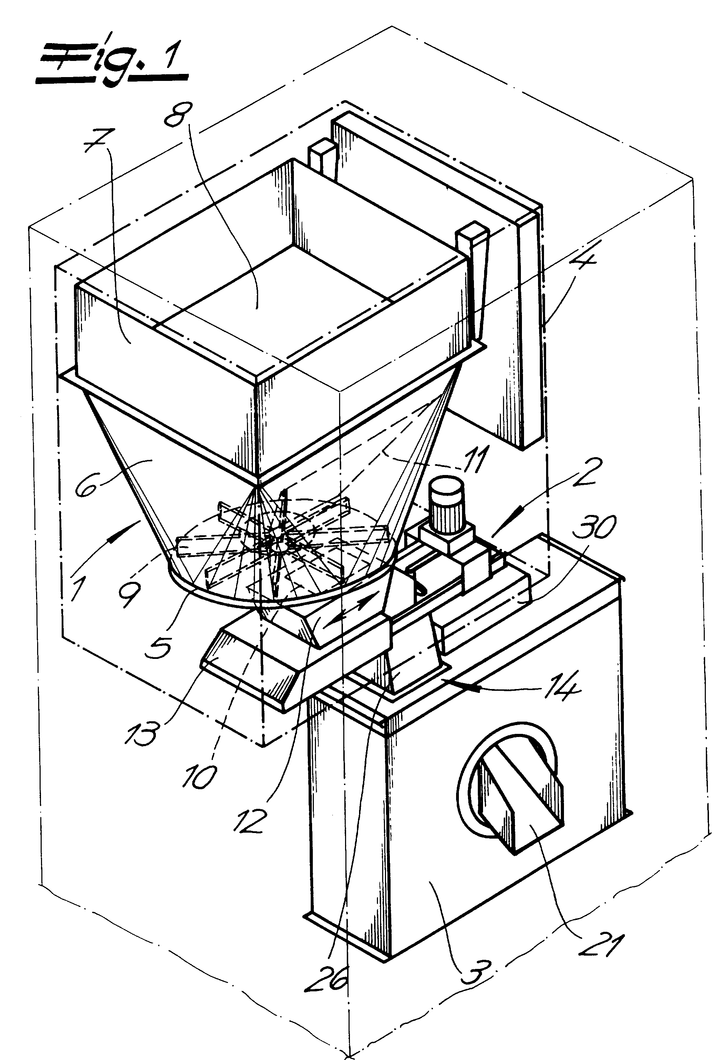

Aus der Fig. 1 erkennt man, daß der Vorratsbehälter aus einem an seiner Unterseite durch einen Boden 5 verschlossenen Trichter 6 besteht, der von oben über eine herausziehbare Schublade 7 mit entnehmbaren Boden 8 mit rohen oder vorfritierten Kartoffelstäbchen befüllbar ist. Die Schublade 7 wird mit eingesetztem Boden 8 außerhalb des Verkaufsautomaten gefüllt und danach in den Verkaufsautomaten eingeschoben, woraufhin der Boden 8 herausgezogen wird, so daß die Kartoffelstäbchen in den Trichter 6 fallen. Der Boden 8 der Schublade 7 kann durch Einschieben in den Verkaufsautomaten oberhalb der Schublade 7 aufbewahrt werden. Auf dem Boden 5 des Trichters 6 arbeitet ein Speichenrad 9, das die Kartoffelstäbchen zu einer rechteckigen Auslaßöffnung 10 im Boden 5 befördert; oberhalb dieser Auslaßöffnung 10 und des Speichenrades 9 ist eine Schrägwand 11 im Trichter 6 angeordnet, damit die Kartoffelstäbchen nicht von allein in die Auslaßöffnung 10 gelangen. Unterhalb der Auslaßöffnung 10 ist ein weiterer kleinerer Trichter 12 und darunter eine elektronische Waage 13 angeordnet. Mit Hilfe dieser Waage 13 wird die Menge der Kartoffelstäbchen, die für den gezahlten Preis geliefert wird, abgewogen. Sobald die abgewogene Menge erreicht ist, wird das Speichenrad 9 stillgesetzt und der Trichter 12 von der Waage 13 weggezogen, woraufhin die vorgegebene Kartoffelstäbchenmenge in die Friteuse 3 fällt.

Die Friteuse 3 ist mit einer oberen Einfüllöffnung 14 unter der Dosiereinrichtung 2 angeordnet und teilweise mit einem Fritiermittel in Form von Fett oder Öl gefüllt sowie beheizbar. Sie ist mit einer Transporteinrichtung 15 zum Durchleiten der Kartoffelstäbchenmenge ausgerüstet, wobei diese Transporteinrichtung 15 ein von einem Antriebsmotor 16 antreibbares Schaufelrad 17 mit Transportschaufeln 18 aufweist. Das Schaufelrad 17 ist um eine horizontale Achse 19 drehbar in der Friteuse 3 gelagert und mit nur zwei gegenüberliegenden perforierten ebenen Transportschaufeln 18 ausgerüstet. Zentral zwischen den beiden Transportschaufeln 18 ist das offene obere Ende 20 einer schräg nach unten aus der Friteuse 3 herausgeführten Fallrinne 21 für die Pommes frites angeordnet. Die Friteuse 3 weist einen von einem Heizmantel 22 gebildeten quaderförmigen Friteuseninnenraum 23 auf, in den ein in seinem unteren Bereich halbkreiszylinderförmig gebogenes perforiertes Blech 24 eingehängt ist. Die Fallrinne 21 ist in einem Zentraltubus 25 befestigt und von der dem Antriebsmotor 16 gegenüberliegenden Seite her in die Friteuse 3 eingesetzt. Die ebenen Transportschaufeln 18 erstrecken sich vom halbkreisförmig gebogenen Bereich des Blechs 24 bis zum Zentraltubus 25 und zwischen den dazu senkrechten Wandungen der Friteuse 3 und sind gegenüber der Achse 19 des Schaufelrades 17 ein wenig versetzt angeordnet. Die über die Einfüllöffnung 14 in die Friteuse 3 hineingefallene Kartoffelstäbchenmenge wird durch Drehung des Schaufelrades 17 von der nächsten Transportschaufel 18 durch das Fritiermittelbad in einer für das Fritieren geeigneten Zeitspanne hindurch transportiert. Danach werden die Pommes frites von der betreffenden Transportschaufel 18 aus dem Fritiermittelbad herausgehoben, so daß überschüssiges Fritiermittel abtropfen kann. Durch eine Weiterbewegung des Schaufelrades 17 fallen die Pommes frites dann in die Fallrinne 21 und von dort in eine Portionsschale, die aus einem entsprechenden Magazin geliefert worden ist.

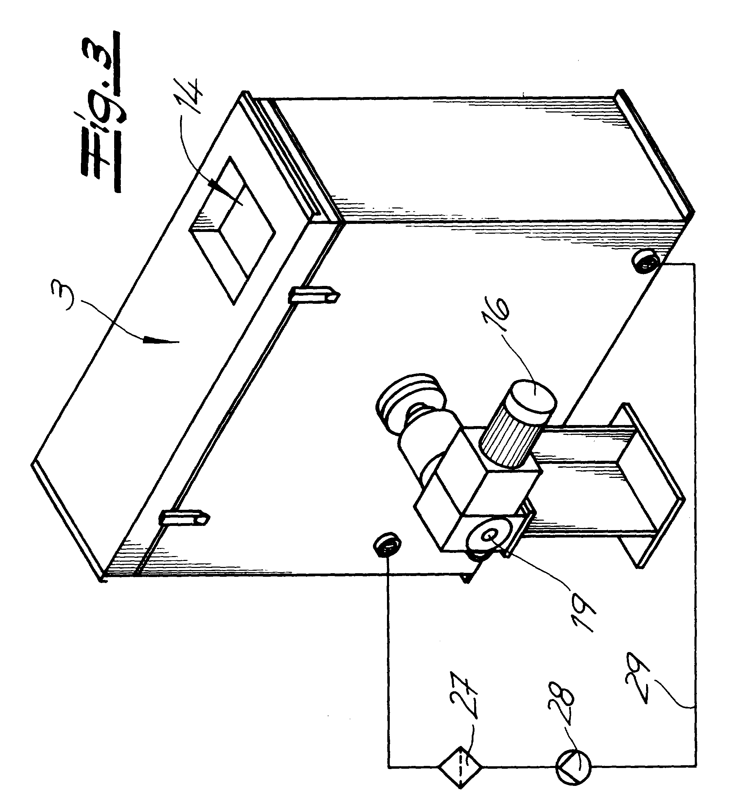

Im Bereich der Einfüllöffnung 14 ist die Friteuse 3 mit einer Öldämpfeabsaugeinrichtung 26 versehen, die an einen entsprechenden Abscheider angeschlossen ist. Außerdem weist die Friteuse 3 noch einen mit einem Filter 27 und einer Pumpe 28 ausgerüsteten Ölreinigungskreislauf 29 auf, der in Fig. 3 schematisch angedeutet ist. Entsprechendes gilt auch für einen Fritiermittelvorratsbehälter 30, der zum Ergänzen des Fritiermittels in der Friteuse dient.

Die Steuerung der einzelnen Aggregate über den Zahlmechanismus des Verkaufsautomaten braucht im einzelnen nicht beschrieben zu werden, da es sich hierbei um übliche Maßnahmen handelt.

## Patentansprüche

1. Verkaufsautomat für Pommes frites, mit einem kühlbaren Vorratsbehälter (1) für rohe oder vorfritierte Kartoffelstäbchen, einer im Bereich des unteren Endes des Vorratsbehälters (1) angeordneten Dosiereinrichtung (2) zum Überführen einer vorgegebenen Kartoffelstäbchenmenge und einer mit einer oberen Einfüllöffnung (14) unter der Dosiereinrichtung (2) angeordneten, teilweise mit einem Fritiermittel gefüllten beheizbaren Friteuse (3) mit Transporteinrichtung (15) zum Durchleiten der Kartoffelstäbchenmenge, wobei die Transporteinrichtung (15) ein um eine horizontale Achse (19) drehbar in der Friteuse (3) gelagertes, von einem Antriebsmotor (16) antreibbares Schaufelrad (17) mit sich zwischen zur Achse (19) senkrechten Wandungen der Friteuse (3) erstreckenden ebenen Transportschaufeln (18) aufweist und zentral zwischen den Transportschaufeln (18) ein Zentraltubus (25) mit einer oberen Öffnung (20) und einer am Zentraltubus (25) befestigten Fallrinne (21) zum Abführen der Pommes frites angeordnet ist. **dadurch gekennzeichnet**, daß die Friteuse (3) einen quaderförmigen Friteuseninnenraum (23) aufweist, in den ein in seinem unteren Bereich halbkreisförmig gebogenes perforiertes Blech (24) eingehängt ist, daß am Schaufelrad (17) nur zwei, sich gegenüberliegend zwischen diesem Blech (24) und dem Zentraltubus (25) erstreckende perforierte Transportschaufeln (18) in einer gegenüber der Achse (19) des Schaufelrades (17) versetzten Anordnung vorgesehen sind und daß die Fallrinne (21) in den Zentraltubus (25) hinein bis unter dessen obere Öffnung (20) geführt ist.

2. Verkaufsautomat nach Anspruch 1, dadurch gekennzeichnet, daß die Friteuse (3) im Bereich der Einfüllöffnung (14) mit einer Öldämpfeabsaugeinrichtung (26) versehen ist.

3. Verkaufsautomat nach Anspruch 1 oder 2, dadurch gekennzeichnet, daß die Friteuse (3) mit einem ein Filter (27) und eine Pumpe (28) aufweisenden Ölreinigungskreislauf (29) ausgerüstet ist.

4. Verkaufsautomat nach einem der Ansprüche 1 bis 3. gekennzeichnet durch einen Fritiermittelvorratsbehälter (30) zum Ergänzen des Fritiermittels in der Friteuse (3).

## Claims

1. An automatic vending machine for chipped potatoes, having a supply container (1), which can be refrigerated, for raw or pre-fried potato sticks, a metering device (2) disposed in the region of the bottom end of the supply container (1) for transferring a predetermined quantity of potato sticks, and a heatable deep fat fryer (3) with a transport device (15) for passing through the quantity of potato sticks, which deep fat fryer is partially filled with a frying medium and a top filling opening (14) of which is disposed under the metering device (2), wherein the transport device (15) comprises a blade wheel (17), which is rotatably mounted about a horizontal axis (19) in the deep fat fryer (3), can be driven by a drive motor (16), and has flat transport blades (18) extending between walls of the deep fat fryer (3) which are perpendicular to the axis (19), and a central tubular body (25), which has a top opening (20) and a descending channel (21) fixed to the central tubular body (25) for delivering the chipped potatoes, is disposed centrally between the transport blades (18), characterised in that the deep fat fryer (3) has a deep fat fryer interior space (23) in the form of a right parallelepiped, in which a perforated metal sheet (24) is suspended which is bent into the shape of a semicircle in its lower region, that only two perforated transport blades (18) are provided on the blade wheel (17), which transport blades extend opposite each other between the said metal sheet (24) and the central tubular body (25) in an arrangement which is displaced in relation to the axis (19) of the blade wheel (17), and that the descending channel (21) is led into the central tubular body (25) until it is under the top opening (20) thereof.

2. An automatic vending machine according to claim 1, characterised in that the deep fat fryer (3) is provided with an oil vapour extraction device (26) in the region of its filling opening (14).

3. An automatic vending machine according to claim 1 or 2, characterised in that the deep fat fryer (3) is equipped with an oil purification circuit (29) comprising a filter (27) and a pump (28).

4. An automatic vending machine according to any one of claims 1 to 3, characterised by a frying medium supply container (30) for augmenting the frying medium in the deep fat fryer (3).

## Revendications

1. Distributeur automatique de frites, comprenant un réservoir réfrigéré (1) pour des bâtonnets de pomme de terre crus ou préfrits, un dispositif de dosage (2) disposé dans la zone de l'extrémité inférieure du réservoir (1) et destiné à fournir une quantité prédéfinie de bâtonnets de pomme de terre, et une friteuse chauffée (3) dont l'ouverture supérieure de remplissage (14) se trouve audessous du dispositif de dosage (2), qui est partiellement remplie de friture et qui comporte un dispositif de transport (15) pour acheminer la quantité de bâtonnets de pomme de terre, le dispositif de transport (15) comportant une roue à palettes (17) qui est montée en rotation autour d'un axe horizontal (19) dans la friteuse (3) et est entraînée par un moteur d'entraînement (16) et qui est garnie de palettes de transport planes (18) s'étendant entre des parois de la friteuse (3) perpendiculaires à l'axe (19), et au centre, entre les palettes de transport (18), étant disposé un tube central (25) comportant une ouverture supérieure (20) et une goulotte (21) fixée au tube central (25) et destinée à évacuer les frites, caractérisé en ce que la friteuse (3) comporte un compartiment intérieur parallélépipédique de friteuse (23), dans lequel est accrochée une tôle perforée (24) cintrée en demi-cercle dans sa zone inférieure, en ce qu'il n'est prévu, sur la roue à palettes (17), que deux palettes de transport perforées (18) qui s'étendent à l'opposé l'une de l'autre entre cette tôle (24) et le tube central (25) et ont une position décalée par rapport à l'axe (19) de la roue à palettes (17), et en ce que la goulotte (21) pénètre dans le tube central (25) jusque sous l'ouverture supérieure (20) de celui-ci.

2. Distributeur automatique selon la revendication 1, caractérisé en ce que, dans la zone de l'ouverture de remplissage (14), la friteuse (3) est munie d'un dispositif (26) d'aspiration des vapeurs d'huile.

3. Distributeur automatique selon la revendication 1 ou 2, caractérisé en ce que la friteuse (3) est équipée d'un circuit (29) d'épuration d'huile comportant un filtre (27) et une pompe (28).

4. Distributeur automatique selon l'une des revendications 1 à 3, caractérisé par un réservoir de friture (30) pour compléter la friture présente dans la friteuse (3).
